**Europäisches Patentamt**

**European Patent Office**

**Office européen des brevets**

(19)

(11) Numéro de publication : **0 034 975**
**B1**

# FASCICULE DE BREVET EUROPÉEN

(12)

(45) Date de publication du fascicule du brevet :
**25.07.84**

(21) Numéro de dépôt : **81400230.9**

(22) Date de dépôt : **13.02.81**

(51) Int. Cl.³ : **B 03 B 5/22**, B 01 D 19/00

(54) **Procédé de nettoyage d'un matériau divisé et installation pour la mise en oeuvre de ce procédé.**

(30) Priorité : **15.02.80 FR 8003373**

(43) Date de publication de la demande :
**02.09.81 Bulletin 81/35**

(45) Mention de la délivrance du brevet :
**25.07.84 Bulletin 84/30**

(84) Etats contractants désignés :
**BE DE IT LU NL**

(56) Documents cités :
**DE-C-    914 073**
**FR-A- 1 306 643**
**LU-A-     65 994**
**US-A- 3 765 182**

(73) Titulaire : **Compagnie Française des Silices et des Sables de Nemours "SIFRACO" Société Anonyme**
**11, rue de Téhéran**
**F-75008 Paris (FR)**

(72) Inventeur : **Belin, Philippe**
**38, rue Ampère**
**F-75017 Paris (FR)**
Inventeur : **Pelletier, Jean Louis**
**12, rue Mayran**
**F-75009 Paris (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

La présente invention concerne un procédé de nettoyage d'un matériau divisé, ainsi qu'une installation de mise en œuvre de ce procédé.

Elle s'applique notamment au nettoyage de matériaux contenus dans un liquide et plus particulièrement au nettoyage de grains emprisonnés dans une gangue.

On sait qu'au cours de son mouvement dans un circuit, un liquide est soumis à des variations de pression et que lorsque la pression locale descend au-dessous de la pression de vapeur saturante du liquide, il peut se former des cavités remplies de vapeur, dans ce liquide. Lorsque des bulles de vapeur atteignent des régions de plus forte pression, elles se condensent très brutalement et implosent. C'est le phénomène de cavitation. Ce phénomène apparaît généralement dans les turbines, les pompes centrifuges, les vannes, les robinets, les hélices, etc. Cette cavitation est très gênante puisqu'elle détruit progressivement les dispositifs hydrauliques énumérés ci-dessus. Cette cavitation est généralement précédée par la formation de bulles de gaz ou d'air dissous.

La dissolution et le dégagement de l'air présentent un caractère lent tandis que la vaporisation et la condensation qui se produisent lors de la cavitation ont un caractère très brutal. Il en résulte que pour éviter les phénomènes de cavitation, on introduit volontairement de l'air dans les circuits des systèmes hydrauliques ; cet air sert de coussin absorbant les chocs dus à la condensation des bulles de vapeur, lors de la cavitation. En fait, la cavitation résulte de l'implosion des bulles de vapeur, dans le liquide. Elle provoque une forte érosion dans tous les systèmes hydrauliques, ce qui impose la recherche d'un régime d'emploi optimal, évitant la cavitation des fluides qu'ils contiennent.

Alors que dans tous les systèmes hydrauliques existants, on cherche à éviter la cavitation, l'invention a au contraire pour but de définir un procédé et de réaliser un dispositif qui permettent le dégazage et la mise en cavitation d'un liquide, de manière que, grâce aux implosions de bulles gazeuses et aux ultrasons qui en résultent, on puisse nettoyer des matériaux contenus dans ce liquide.

L'invention vise tout d'abord un procédé de nettoyage d'un matériau divisé, caractérisé en ce qu'il consiste à dégazer préalablement au moins un liquide, puis à disperser le matériau à nettoyer dans le liquide dégazé, puis à mettre en cavitation le liquide dégazé contenant le matériau dispersé en le faisant circuler d'amont en aval d'un diaphragme en provoquant une dépression en aval de ce diaphragme.

L'invention a aussi pour objet une installation de nettoyage d'un matériau divisé par application du procédé ci-dessus, caractérisée en ce qu'elle comporte successivement, d'amont en aval :

— des moyens pour dégazer le liquide, dans un réservoir,

— des moyens pour disperser dans le réservoir, le matériau à nettoyer,

— un conduit de circulation de la dispersion obtenue dans le réservoir, ce conduit contenant un diaphragme présentant un orifice de dimension inférieure à la dimension interne du conduit, et

— des moyens pour provoquer une dépression en aval du diaphragme dans le conduit.

Selon une autre caractéristique, les moyens qui provoquent une dépression en aval du diaphragme, sont constitués par une pompe apte à assurer la circulation du liquide dans le conduit, à travers le diaphragme, en provoquant la dépression en aval du diaphragme.

Selon une autre caractéristique, la pompe est une pompe aspirante associée à des moyens d'entraînement et dont l'aspiration est reliée à l'extrémité du conduit en aval du diaphragme.

Selon une autre caractéristique, la pompe est une pompe centrifuge.

Selon une autre caractéristique, les moyens d'entraînement de la pompe comprennent un moteur associé à des moyens pour régler la vitesse optimale de rotation de la pompe, pour provoquer la cavitation du liquide, dans le conduit, en aval du diaphragme.

Selon une autre caractéristique, les moyens de réglage sont en outre aptes à règler la vitesse de rotation de la pompe pour provoquer la cavitation du liquide dans la pompe.

Selon une autre caractéristique, le liquide contient des matériaux à débarrasser d'une gangue les enrobant au moins partiellement, le refoulement de la pompe est relié à des moyens de séparation des matériaux propres et de la gangue.

Selon une autre caractéristique, les moyens de séparation sont de type mécanique, électrique, chimique ou magnétique.

Enfin l'invention s'applique au dégazage de liquides, au nettoyage de matériaux contenus dans un liquide, à l'homogénéisation de mélanges liquides, à la génération d'ultrasons.

Les caractéristiques et avantages de l'invention ressortiront mieux de la description qui va suivre, donnée en référence aux dessins annexés dans lesquels :

la figure 1 représente schématiquement un mode de réalisation d'une installation conforme à l'invention,

la figure 2 est un diagramme montrant la pression en aval du diaphragme, en fonction de la vitesse de rotation de la pompe.

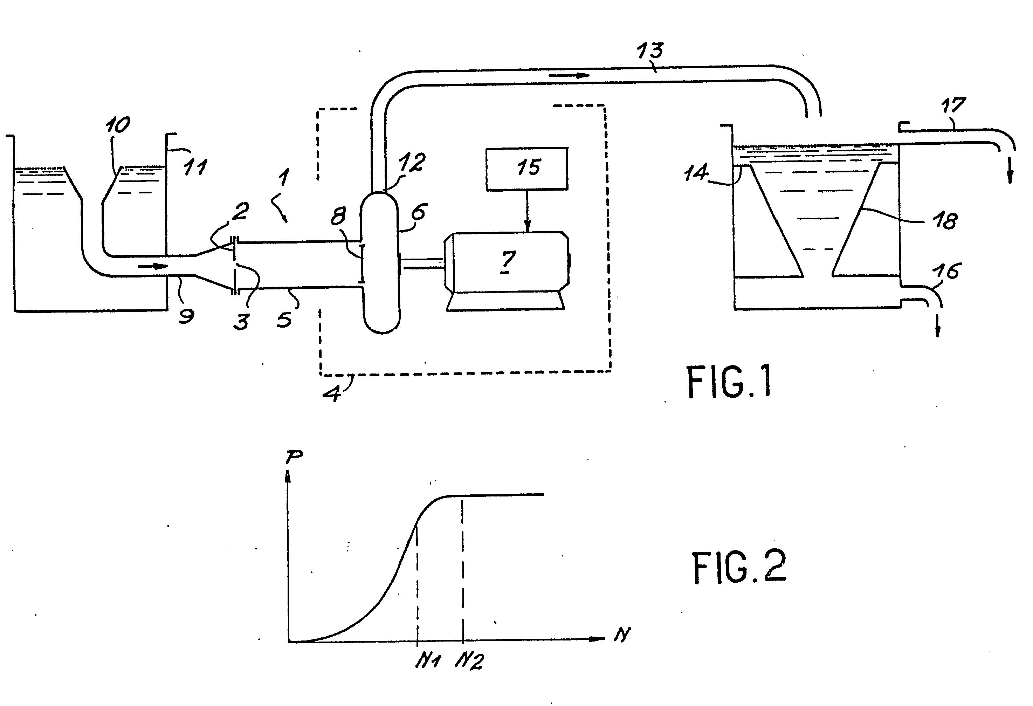

La figure 1 représente un dispositif conforme à l'invention, qui comprend un conduit 1 de circulation d'un liquide dans lequel on veut provoquer une cavitation ; un diaphragme 2 est situé dans le conduit et présente un orifice 3 de dimension inférieure à la dimension interne du conduit. Le dispositif comprend en outre des moyens 4, pour provoquer une dépression dans la partie 5 du conduit 1, en aval du diaphragme 2. Les moyens 4 sont constitués par une pompe aspirante qui, dans le mode de réalisation préféré de l'invention, est une pompe centrifuge 6 associée à des moyens d'entraînement, constitués ici par un moteur 7. L'aspiration 8 de la pompe 6, est reliée à l'extrémité du conduit 1, en aval du diaphragme 2. Le conduit 1 est prolongé en amont du diaphragme 2 par une conduite 9, de moindre dimension que celle de la conduite 5, de manière à favoriser la dépression créée par la pompe, en aval du diaphragme. Cette conduite présente un cône d'entrée 10, situé dans un réservoir 11. Le cône d'entrée 10 permet dans l'application de l'installation, de déverser des matériaux en grains à nettoyer, tandis que le réservoir 11 contient de l'eau. Le refoulement 12 de la pompe 6 est relié par une conduite 13, à un réservoir de sortie 14. Les moyens d'entraînement de la pompe comprennent également des moyens 15 pour régler sa vitesse de rotation, de manière qu'à cette vitesse, il se produise une cavitation du liquide dans le conduit, en aval du diaphragme. Il est également possible, grâce à ces moyens de réglage, de commander la rotation de la pompe de manière à créer une cavitation du liquide dans celle-ci.

Le liquide contenant des matériaux à débarrasser d'une gangue qui les enrobe au moins partiellement, le refoulement de la pompe est relié à des moyens de séparation des matériaux propres et de la gangue, situés dans le réservoir de sortie 14. Dans le cas de matériaux en grains par exemple, ces moyens de séparation peuvent être constitués par un cyclone ou un décanteur statique ou un bac de décantation 18, constitués de manière connue, et qui permet, par décantation, d'évacuer les matériaux propres par le conduit 16 tandis que les particules légères qui formaient la gangue sont évacuées par le conduit 17.

Il est bien évident que les moyens de séparation qui viennent d'être mentionnés sont de type mécanique mais qu'ils peuvent être de type chimique, électrique ou magnétique par exemple.

L'installation qui vient d'être décrite, permet, grâce à la cavitation du liquide, en aval du diaphragme 2 et éventuellement dans la pompe 6, de nettoyer des matériaux tels que par exemple des sables, des copeaux. La cavitation qui se produit dans le conduit 1, en aval du diaphragme, est accompagnée d'ultrasons qui peuvent trouver d'autres applications particulières. Afin de faciliter la cavitation, il est nécessaire, avant la mise en œuvre de l'installation, de dégazer le liquide qui est pompé dans le réservoir 11. En effet, les gaz dissous dans le liquide empêchent le phénomène de cavitation de se dérouler dans de bonnes conditions.

La figure 2 est un diagramme qui représente en fonction de la vitesse N de rotation de la pompe, la pression P dans la pompe. On remarquera sur cette figure que la pression P croît de façon sensiblement constante, en fonction de la vitesse, jusqu'à une vitesse N1 puis qu'elle se stabilise pour une vitesse de rotation N2 de la pompe.

C'est entre les vitesses N1 et N2 que le phénomène de cavitation se produit. La pompe utilisée dans le dispositif de l'invention a permis d'atteindre des pressions ponctuelles estimées à 100 000 bars, tandis que le bruit ultra-sonore qui accompagne la cavitation, présente une fréquence de 33 kHz au sein d'un spectre très étendu. Cette cavitation dépend essentiellement du débit de la pompe, du diamètre de l'aspiration de celle-ci, de la charge en amont du diaphragme et du rapport d/D (d représentant le diamètre de l'orifice du diaphragme et D le diamètre du tube en aval de ce diaphragme). La cavitation dépend également de la nature du liquide qui traverse le diaphragme et de la teneur des gaz dissous dans ce liquide.

L'installation permet, non seulement le pompage des matériaux, mais également le lavage et le transport de ceux-ci vers un bac de sortie. Enfin, il est possible d'additionner au liquide dans lequel sont contenus ces matériaux, des produits qui favorisent leur nettoyage. Les ultrasons qui sont produits par cavitation, favorisent le nettoyage des matériaux par une action conjointe d'attrition.

Dans le cas du nettoyage des sables, il est possible que des éléments métalliques, tels que des particules ferreuses, soient apportés par le fer contenu dans les alliages qui composent les conduits et la pompe ; ces particules ferreuses peuvent être éliminées soit par voie chimique, soit par voie électrochimique, soit même par l'utilisation du cyclone mentionné plus haut. Enfin, il est aussi possible de constituer les conduits et la pompe dans des matériaux qui ne provoquent pas l'apparition de particules gênantes, se recombinant avec les matériaux à nettoyer.

L'invention permet bien d'atteindre les buts mentionnés plus haut et notamment de nettoyer des matériaux en provoquant la cavitation d'un liquide contenant ces matériaux, en aval d'un diaphragme traversé par ce liquide et éventuellement dans la pompe traversée par ce liquide.

Il est à remarquer que l'on peut associer une pluralité d'installations conformes à l'invention, soit en série, soit en parallèle, soit en série-parallèle.

Il est également à remarquer que l'installation permet l'obtention de liquides dégazés.

**Revendications**

1. Procédé de nettoyage d'un matériau divisé, caractérisé en ce qu'il consiste à dégazer préalablement au moins un liquide, puis à disperser le matériau à nettoyer dans le liquide dégazé, puis à mettre en cavitation le liquide dégazé contenant le matériau dispersé en le faisant circuler d'amont en aval d'un diaphragme en provoquant une dépression en aval de ce diaphragme.

2. Installation de nettoyage d'un matériau divisé par application du procédé selon la revendication 1, caractérisée en ce qu'elle comporte successivement, d'amont en aval :

— des moyens pour dégazer le liquide dans un réservoir (11),

— des moyens (10) pour disperser dans le réservoir le matériau à nettoyer,

— un conduit (1) de circulation de la dispersion obtenue dans le réservoir, ce conduit contenant un diaphragme (2) présentant un orifice (3) de dimension inférieure à la dimension interne du conduit, et

— des moyens (4) pour provoquer une dépression en aval du diaphragme dans le conduit (1).

3. Installation selon la revendication 2, caractérisée en ce que les moyens pour provoquer une dépression en aval du diaphragme sont constitués par une pompe (6) apte à assurer la circulation du ou des liquides dans le conduit, à travers le diaphragme (2), en provoquant la dépression en aval (5) du diaphragme (2).

4. Installation selon la revendication 3, caractérisée en ce que la pompe (6) est une pompe aspirante, associée à des moyens d'entraînement (7) et dont l'aspiration (8) est reliée à l'extrémité du conduit (1) en aval du diaphragme (2).

5. Installation selon la revendication 4, caractérisée en ce que la pompe (6) est une pompe centrifuge.

6. Installation selon la revendication 5, caractérisée en ce que les moyens d'entraînement de la pompe comprennent un moteur (7) associé à des moyens (15) pour régler la vitesse optimale de rotation de la pompe, pour provoquer la cavitation du liquide dans le conduit (1), en aval du diaphragme.

7. Installation selon la revendication 6, caractérisée en ce que les moyens de réglage (15) sont en outre aptes à régler la vitesse de rotation de la pompe pour provoquer la cavitation du liquide dans la pompe.

8. Installation selon l'une quelconque des revendications 3 à 7, caractérisée en ce que, le ou les liquides contenant des matériaux à débarrasser d'une gangue les enrobant au moins partiellement, le refoulement (12) de la pompe est relié à des moyens (15) de séparation des matériaux propres et de la gangue.

9. Installation selon la revendication 8, caractérisée en ce que les moyens (15) de séparation sont de type mécanique, électrique, chimique ou magnétique.

**Claims**

1. Process for cleaning a particulate material characterized in that it consists of previously degassing at least one liquid, then dispersing the material to be cleaned in the degassed liquid, then subjecting the degassed liquid containing the dispersed material to cavitation by making it circulate from upstream to downstream of a diaphragm by bringing about a vacuum downstream of said diaphragm.

2. Installation for cleaning a particulate material by applying the process according to claim 1, characterized in that it successively comprises from upstream to downstream :

— means for degassing the liquid in a tank (11),

— means (10) for dispersing the material to be cleaned in the tank,

— a pipe (1) for circulating the dispersion obtained in the tank, said pipe containing a diaphragm (2) with an orifice (3) having a size smaller than the internal size of the pipe, and

— means (4) for bringing about a vacuum downstream of the diaphragm in pipe (1).

3. Installation according to claim 2, characterized in that the means for bringing about a vacuum downstream of the diaphragm are constituted by a pump (6) able to circulate the liquid or liquids in the pipe, through diaphragm (2), by bringing about the vacuum downstream (5) of diaphragm (2).

4. Installation according to claim 3, characterized in that pump (6) is a suction pump associated with drive means (4) and whereof the suction side (8) is connected to the end of pipe (1) downstream of diaphragm (2).

5. Installation according to claim 4, characterized in that the pump (6) is a centrifugal pump.

6. Installation according to claim 5, characterized in that the pump drive means comprise a motor (7) associated with means (14) for regulating the optimum rotation speed of the pump in order to bring about the cavitation of the liquid in pipe (1) downstream of the diaphragm.

7. Installation according to claim 6, characterized in that the regulating means (15) are also able to regulate the rotation speed of the pump to bring about the cavitation of the liquid in the pump.

8. Installation according to any one of the claims 3 to 7, characterized in that the liquid or liquids contain materials to be freed from a matrix or gangue which at least partly coats them, so that the delivery side (12) of the pump is connected to means (15) for separating the clean materials and the matrix or gangue.

9. Installation according to claim 8, characterized in that the separating means (15) are of the mechanical, electrical, chemical or magnetic type.

**Ansprüche**

1. Verfahren zur Reinigung von teilchenförmigem Material, dadurch gekennzeichnet, daß dieses darin besteht vorhergehend wenigstens eine Flüssigkeit zu entgasen, dann das zu reinigende Material in der entgasten Flüssigkeit zu verteilen und daraufhin, die das verteilte Material enthaltende, entgaste Flüssigkeit in Kavitation zu versetzen, indem man jene von stromaufwärts nach stromabwärts einer Drosselscheibe strömen läßt, wobei stromabwärts dieser Drosselscheibe ein Unterdruck erzeugt wird.

2. Vorrichtung zum Reinigen von teilchenförmigem Material zur Durchführung des Verfahrens nach Anspruch 1, dadurch gekennzeichnet, daß diese aufeinanderfolgend von stromaufwärts nach stromabwärts umfaßt :

— Mittel, um die Flüssigkeit in einem Behälter (11) zu entgasen,

— Mittel (10), um das zu reinigende Material in dem Behälter zu verteilen,

— eine Strömungsleitung (1) für die in dem Behälter erhaltene Dispersion, wobei diese Leitung eine Drosselscheibe (2) mit einer Öffnung (3) enthält, deren Abmessung kleiner als die Innenabmessung der Leitung ist, und

— Mittel (4), um stromabwärts der Drosselscheibe in der Leitung (1) einen Unterdruck hervorzurufen.

3. Vorrichtung nach Anspruch 2, dadurch gekennzeichnet, daß die Mittel zum Hervorrufen eines Unterdrucks stromabwärts der Drosselscheibe von einer Pumpe (6) gebildet sind, die geeignet ist, um die Strömung der Flüssigkeit oder der Flüssigkeiten in der Leitung quer durch die Drosselscheibe (2) sicherzustellen, indem ein Unterdruck stromabwärts (5) der Drosselscheibe (2) hervorgerufen wird.

4. Vorrichtung nach Anspruch 3, dadurch gekennzeichnet, daß die Pumpe (6) eine Saugpumpe ist, die mit Antriebsmitteln (7) verbunden ist, und daß die Ansaugseite (8) mit dem Ende der Leitung (1) stromabwärts der Drosselscheibe (2) verbunden ist.

5. Vorrichtung nach Anspruch 4, dadurch gekennzeichnet, daß die Pumpe (6) eine Kreiselpumpe ist.

6. Vorrichtung nach Anspruch 5, dadurch gekennzeichnet, daß die Mittel zum Antreiben der Pumpe einen Motor (7) umfassen, der mit Mitteln (15) zum Regeln der optimalen Drehzahl der Pumpe verbunden ist, um die Kavitation der Flüssigkeit in der Leitung (1) stromabwärts der Drosselscheibe hervorzurufen.

7. Vorrichtung nach Anspruch 6, dadurch gekennzeichnet, daß die Regelmittel (15) ferner die Drehzahl der Pumpe regeln können, um die Kavitation der Flüssigkeit in der Pumpe hervorzurufen.

8. Vorrichtung nach einem der Ansprüche 3 bis 7, dadurch gekennzeichnet, daß die Flüssigkeit oder die Flüssigkeiten Materialien enthält bzw. enthalten, die von einer Gangart zu befreien sind, welche sie wenigstens teilweise umgibt, und daß die Förderseite (12) der Pumpe mit Mitteln (15) verbunden ist, um die eigentlichen Materialien und die Gangart voneinander zu trennen.

9. Vorrichtung nach Anspruch 8, dadurch gekennzeichnet, daß die Trennmittel (15) von mechanischer, elektrischer, chemischer oder magnetischer Art sind.

FIG.1

FIG.2